Europäisches Patentamt

European Patent Office

Office européen des brevets

(19)

(11) EP 1 189 048 A2

(12) EUROPÄISCHE PATENTANMELDUNG

(43) Veröffentlichungstag:
20.03.2002 Patentblatt 2002/12

(51) Int Cl.$^7$: G01L 3/10, G01L 1/22, G01L 1/26

(21) Anmeldenummer: 01122253.6

(22) Anmeldetag: 17.09.2001

(84) Benannte Vertragsstaaten:
AT BE CH CY DE DK ES FI FR GB GR IE IT LI LU
MC NL PT SE TR
Benannte Erstreckungsstaaten:
AL LT LV MK RO SI

(30) Priorität: 17.07.2001 DE 10135685
19.09.2000 DE 20016330 U

(71) Anmelder: SIEMENS AKTIENGESELLSCHAFT
80333 München (DE)

(72) Erfinder:
• Penzar, Zlatko, Dr. rer. nat.
60529 Frankfurt (DE)
• Porth, Wolfgang
60388 Frankfurt (DE)
• Irion, Jürgen
29378 Wittingen (DE)
• Rassler, Andrea
61449 Steinbach (DE)

(54) **Biege- und Querkraftunempfindlicher mechanisch-elektrischer Wandler**

(57) Die Erfindung betrifft einen mechanisch-elektrischen Wandler, mit einer dehnungsempfindlichen Widerstände aufweisenden Brückenschaltung, wobei die dehnungsempfindlichen Widerstände unmittelbar auf einem, einen annähernd rechteckförmigen Querschnitt aufweisenden Bauteil angeordnet sind, an welchem zwischenträgerfrei direkt Torsionskräfte angreifen, wobei bei Torsion des Bauteiles ein der Dehnung der Dickschichtwiderstände entsprechendes elektrisches Signal an der Brückenschaltung abnehmbar ist.

Bei einem mechanisch-elektrischer Wandler, bei welchem bei variierender Biegelast die Erzeugung eines Brückensignales in Folge von Biegemomenten zuverlässig verhindert wird, sind die dehnungsempfindlichen Widerstände (R1, R2, R3, R4) auf einem Bauteil (1) kreisähnlich angeordnet, wobei je ein Widerstand (R1, R3) des ersten Brückenzweiges diagonal zu einem Widerstand (R4, R2) des zweiten Brückenzweiges jeweils in einer Position (r) angeordnet ist, in welcher die Widerstandsänderung unter allgemeiner Biegelast gleiche Werte einnimmt, wodurch das an der Brükkenschaltung abnehmbare Ausgangssignal ($U_Q$) nur von der Torsionsbelastung abhängig ist.

**Fig. 1**

EP 1 189 048 A2

## Beschreibung

Die Erfindung betrifft einen mechanisch-elektrischen Wandler, mit einer dehnungsempfindlichen Widerstände aufweisenden Brückenschaltung, wobei die dehnungsempfindlichen Widerstände unmittelbar auf einem, einen annähernd rechteckförmigen Querschnitt aufweisenden Bauteil angeordnet sind, an welchem zwischenträgerfrei direkt Torsionskräfte angreifen, wobei bei Torsion des Bauteiles ein der Dehnung der Dickschichtwiderstände entsprechendes elektrisches Signal an der Brückenschaltung abnehmbar ist.

Aus der DE 198 43 579 A1 ist ein gattungsgemäßer mechanisch-elektrischer Wandler bekannt. Bei diesem Wandler sind die dehnungsempfindlichen Dickschichtwiderstände unmittelbar auf einer als Trägerelement ausgebildeten Welle angeordnet. Die Welle ist dabei einer mechanischen Belastung in Form einer Torsion ausgesetzt. Die Widerstände der Brückenschaltungen sind außerhalb der Erstreckungsrichtung einer für Biegebelastung neutralen Phase des Bauteiles angeordnet und weisen zu dieser einen vorgegebenen Abstand und einen vorgegebenen Winkel auf. Aufgrund einer vorgegebenen Verschaltung wird erreicht, daß bei einem konstanten Biegemoment ein auf die Biegelast zurückzuführendes Störsignal im Ausgangssignal der Brückenschaltung unterbunden wird.

Beim Anliegen sich ändernder Biegemomente treten aber bei den Widerständen unterschiedliche Widerstandsänderungen auf, die durch eine Verschaltung nicht kompensiert werden können.

Der Erfindung liegt somit die Aufgabe zugrunde, einen mechanisch-elektrischen Wandler anzugeben, bei welchem bei variierender Biegelast die Erzeugung eines Brückensignales infolge von Biegemomenten zuverlässig verhindert wird.

Erfindungsgemäß wird die Aufgabe dadurch gelöst, daß die dehnungsempfindlichen Widerstände auf dem Bauteil annähernd kreisähnlich angeordnet sind, wobei je ein Widerstand der ersten Brückenzweiges diagonal zu einem Widerstand des zweiten Brückenzweiges jeweils in einer Position angeordnet ist, in welcher die Widerstandsänderung unter allgemeiner Biegelast gleiche Werte annimmt, wodurch das an der Brückenschaltung abnehmbare Ausgangssignal nur von der Torsionsbelastung abhängig ist.

Die Erfindung hat den Vorteil, daß die durch Biegemomente hervorgerufenen Signaländerungen nicht in einer Verschaltung kompensiert werden müssen, sondern allein durch die biegekompensierte Plazierung der Widerstände erreicht wird. Dabei bedeutet allgemeine Biegelast, dass ein nicht konstantes Biegemoment anliegt ohne bevorzugte Richtung anliegt.

Durch die erfindungsgemäße Anordnung sind die Widerstände jedes Zweiges der Brückenschaltung beidseitig zu einer auf Biegebelastung neutralen Phase derart angeordnet, daß die auf einer Seite der neutralen Phase liegenden dehnungsempfindlichen Widerstände jedes Brückenzweiges bei sich ändernder Biegebelastung gleiche Widerstandsänderungen erfahren, wobei das an der Brückenschaltung abnehmbare Ausgangssignal keine Anteile infolge der Biegebelastung aufweist.

Vorteilhafterweise sind die dehnungsempfindlichen Widerstände bei einer Biegelast um die biegesteife Achse so angeordnet, daß die Widerstandsänderungen der Widerstände eines Brückenzweiges bei gleichem Betrag entgegengesetzt verläuft. Alternativ sind die dehnungsempfindlichen Widerstände eines Brückenzweiges bei einer Biegelast um die biegeweiche Achse derart angeordnet, daß eine identische Widerstandsänderung auftritt.

In einer Weiterbildung sind die dehnungsempfindlichen Widerstände der Brückenzweige außerhalb einer, auf der Oberfläche des Bauteiles verlaufenden Ausnehmung im Randbereich dieser Ausnehmung, diese umfassend, angeordnet.

Dies hat den Vorteil, daß das Signalverhalten des mechanisch elektrischen Wandlers auf einfache Weise erhöht werden kann. Aufgrund der Ausnehmung überlagern sich die mechanischen, am Trägerelement angreifenden mechanischen Spannungen, wobei die Dehnung in den Hauptrichtungen (longitudinal, transversal) einen ungleichen Betrag aufweisen, wodurch das abgegriffene Meßsignal an der Brückenschaltung in einfacher Weise erhöht werden kann.

Lastinduzierte Änderungen der Widerstandwerte lassen sich in besonders einfacher Weise korrigieren, wenn das Bauteil in seinem Randbereich radiale Einbuchtungen sowie die Ausnehmung radiale Bereiche aufweist, wobei je eine radiale Einbuchtung sowie ein radialer Bereich der Ausnehmung einem Widerstand zugeordnet sind, welcher auf einer Verbindungslinie des ersten Radius der Einbuchtung und eines zweiten Radius der Ausnehmung angeordnet sind.

Ist die Ausnehmung kreisförmig ausgebildet, ist jeder Widerstand radial mit annähernd gleichen Winkelabständen um die Ausnehmung angeordnet. Das heißt, die Widerstände befinden sich im gleichen Abstand zur Mitte der Bohrung.

Durch die Ausnehmung wird das Signalverhalten des Sensors ohne komplexe Änderung der Wellengeometrie einfach erhöht. Ein solcher Sensor ist für die Massenproduktion geeignet, da er kosten- und zeitgünstig herstellbar ist.

Vorteilhafterweise sind die auf dem Metallbauteil angeordneten Widerstände als Dickschichtwiderstände ausgebildet, wobei die Empfindlichkeit der zur Herstellung der Widerstände verwendeten Widerstandspasten bezüglich einer Längs- und Querdehnung unterschiedlich sind. Auch dadurch wird eine Erhöhung des Signalverhaltens des Sensors erreicht.

In einer Weiterbildung der Erfindung sind die Dickschichtwiderstände zur Torsionsmessung in einer Ebene angeordnet. Es ist aber auch möglich, die Dickschichtwiderstände in einer oder mehreren Ebenen anzuordnen.

Vorteilhafterweise können auch zwei Brückenschaltungen verwendet werden, wobei die Widerstände der ersten Brückenschaltung in einer Position $r_1 < r_0$ und die Widerstände der zweiten Brückenschaltung in einer Position $r_2 > r_0$ angeordnet sind, wobei die Positionen $r_1$ und $r_2$ betragsmäßig dieselbe Differenz zur Position $r_0$ aufweisen.

Die Erfindung läßt zahlreiche Ausführungsformen zu. Eine davon soll anhand der in der Zeichnung dargestellten Figuren näher erläutert werden.

Es zeigt:

Figur 1: Draufsicht auf ein auf Torsion zu beanspruchendes erfindungsgemäßes Bauteil

Figur 2: Anordnung des dehnungsempfindlichen Widerstandes auf dem Bauteil nach Figur 1

Figur 3: mechanische Belastung des Bauteiles

Figur 4: Spannungsverlauf in der Brückenschaltung

Gleiche Merkmale sind mit gleichen Bezugszeichen gekennzeichnet.

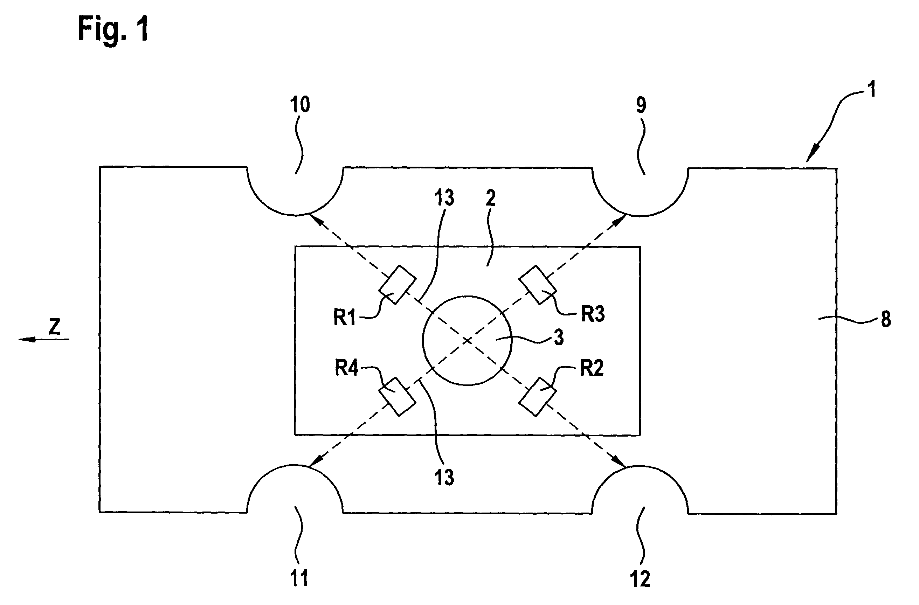

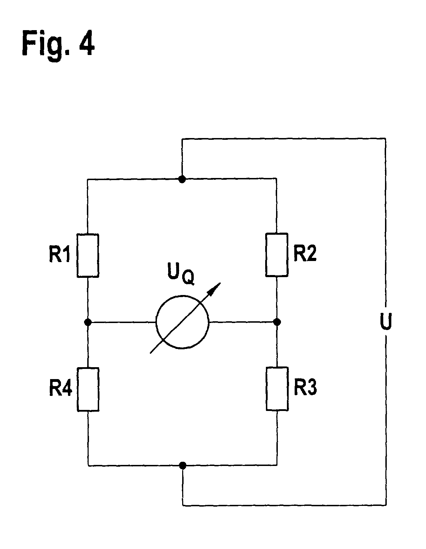

In Figur 1 ist ein Drehmomentsensor für die Anwendung in Lenkhilfesystemen für Kraftfahrzeuge dargestellt. Auf einer auf Torsion zu beanspruchenden Welle 1, welche aus Stahl oder einer Stahllegierung besteht und quaderförmig ausgebildet ist, sind identisch aufgebaute Dickschichtwiderstände R1, R2, R3, R4 angeordnet. Die Widerstände R1, R2, R3, R4 sind Figur 4 entsprechend zu einer Brückenschaltung verknüpft.

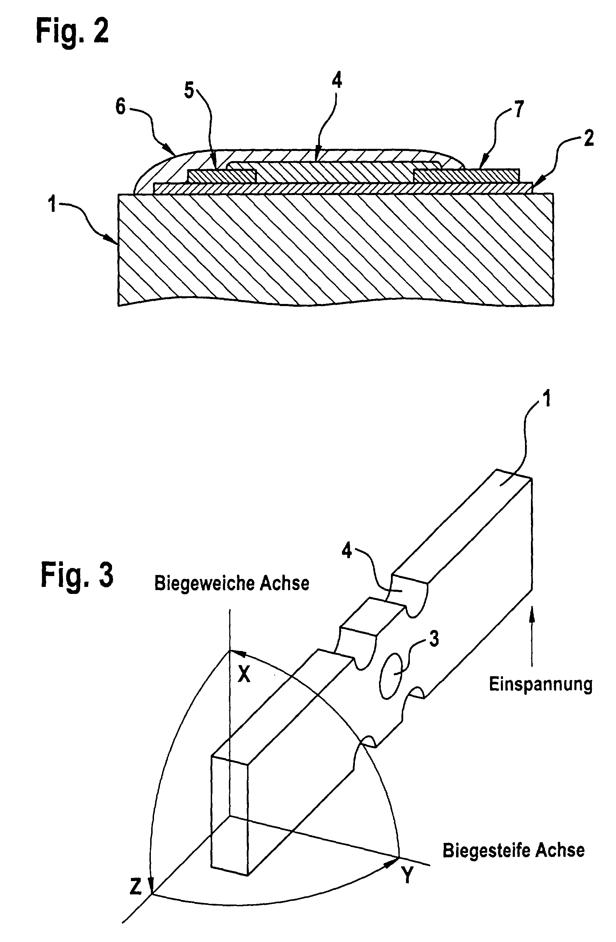

Die Widerstandsbrücke ist in ihrer gesamten Ausdehnung auf einem Dielektrikum 2 angeordnet, welches direkt ohne einen Zwischenträger auf dem Bauteil 1 aufliegt. Ein Schnitt durch einen dehnungsempfindlichen Widerstand R1 ist in Figur 2 dargestellt.

Wie aus Figur 2 hervorgeht, befinden sich auf dem Dielektrikum 2 elektrische Leiterbahnen 5, die durch eine Leiterbahnschicht gebildet sind. Zwischen diesen Leiterbahnen 5 erstreckt sich eine elektrische Widerstandsschicht 9, die dem als Dehnungsmeßstreifen ausgebildeten Widerstand R1, R2, R3 oder R4 bildet. Den Abschluß bildet eine Passivierungsschicht 6, die nur den als Kontaktfläche 7 dienenden Teil mindestens einer Leiterbahn 5 unbedeckt läßt und zur elektrischen Kontaktierung des Widerstandes R1 dient.

Der beschriebene Dehnungsmeßstreifen wird in Dickschichttechnologie unmittelbar auf dem Träger 1 hergestellt.

Um eine innige Verbindung des Dielektrikums 2 mit dem Bauteil 1 herzustellen, wird das Dielektrikum 2 in Drucktechnik mittels einer nicht leitenden Paste auf der Welle 1 aufgetragen. Die Paste enthält dabei eine Glasfritte, die bei geringerer Temperatur schmelzbar ist als das Material der Welle 1. Nach Aufbringen der Paste wird ebenfalls in Siebdrucktechnik eine leitende Schicht aufgebracht, die die Leiterbahn 5 und die Kontaktfläche 7 bildet, auf welcher wiederum die die Widerstände R1, R2, R3. R4 bildende, strukturierte Widerstandsschicht 9 angeordnet ist. Die so vorbereitete Welle 1 wird in einem Hochtemperaturprozess bei einer Temperatur von etwa 750 bis 900 °C wärmebehandelt. Dabei versintert die Glasschicht mit der Oberfläche des Stahls der Welle 1. Bei diesem Aufsintern werden zwischen dem Dielektrikum 2 und der Welle 1 Oxidbrücken gebildet, die eine unlösbare Verbindung zwischen Welle 1 und Dielektrikum 2 gewährleisten, wodurch eine stark innige Verbindung zwischen beiden erreicht wird.

Wie aus Figur 1 ersichtlich weist die Welle 1 eine rechteckige Oberfläche 8 auf, wobei mittig eine kreisförmige Öffnung 3 ausgebildet ist, welche die Welle 1 vollständig durchsetzt.
Der Rand des Bauteiles 1 weist in seiner Längserstreckung beidseitig jeweils zwei halbkreisförmige Randausnehmungen 9, 10 bzw. 11, 12 auf, wobei die Ausnehmungen 10 und 11 sowie 9 und 12 gegenüberliegend angeordnet sind. Die Radien der Randausnehmungen 9, 10, 11, 12 entsprechen annähernd dem Radius der Öffnung 3.

Die Dehnungsmeßstreifen R1, R2, R3, R4 sind auf jeweils einer vom Mittelpunkt der Öffnung 3 ausgehenden Linie 13 angeordnet, wobei die Linie 13 die gedachte Verbindung zwischen dem Radius einer Randausnehmung 9, 10, 11, 12 und den Radius der Öffnung 3 darstellt.
Aufgrund der Öffnung 3 und der Randausnehmungen 9, 10, 11, 12 treten auf der Oberfläche der Welle 1 bei Beanspruchung auf Torsion entlang einer gedachten Mittellinie Z zwei Hauptdehnungen mit unterschiedlichem Betrag auf, welche aus Sicht des jeweiligen Dickschichtwiderstandes R1 bis R4 einer longitudinalen Dehnung und einer transversalen Dehnung entsprechen.

Wie Figur 3 zu entnehmen ist, treten bei der Torsion auch Biegekräfte auf. Man betrachtet dabei die Welle 1 als Biegebalken, welche auf einer Seite fest eingespannt ist. Ausgehend davon, daß die Torsion eine Verdrehung der Welle in Z-Richtung hervorruft, bildet dabei die in Figur 3 dargestellte X-Achse eine biegeweiche Achse, während die in Y-Richtung weisende Achse eine biegesteife Achse ist. Die Wellenachse Z entspricht dabei gleichzeitig der hinsichtlich der Biegebelastung neutralen Phase der Welle 1.
Gemäß Figur 1 sind die Widerstände R1 und R3 auf der einen Seite der neutralen Phase und die Widerstände R4 und R2 auf der anderen Seite der neutralen Phase angeordnet. Da alle Widerstände R1 bis R4 mit demselben radialen Abstand um die Ausnehmung 3 positioniert sind, weisen sie betragsmäßig alle denselben Abstand zur neutralen Phase auf, unterscheiden sich aber in ihrer Winkelstellung zur neutralen Phase.

Die Widerstände R1, R2, R3, R4 sind dabei gemäß Figur 4 elektrisch zu einer Brückenschaltung verschaltet. Dabei ist ersichtlich, daß immer ein Widerstand eines Brückenzweiges auf je einer Seite der neutralen Phase liegt. So liegt der Widerstand R1 des Brückenzweiges R1, R4 auf der einen Seite und der Widerstand R4 der anderen Seite der neutralen Phase.

Dasselbe gilt für die Widerstände R3 und R2 des zweiten Brückenzweiges. Die Widerstände verhalten sich bei örtlich variierender Biegebelastung unterschiedlich, wobei es einen Punkt zum Mittelpunkt der Öffnung 3 gibt, bei welchem die Widerstandsänderung in allen Widerständen R1, R2, R3, R4 gleich ist. Dies gilt für jede beliebige Biegelast um die biegesteife Achse.

Bei einer allgemeinen Biegebelastung (Moment und Momentengradient) um die biegesteife Achse (Y-Achse) ergibt sich, dass bei der Entfernung $r_0$ der Widerstände R1 und R3 zur Mitte der Öffnung 3 die Widerstandsänderungen $\Delta R_1$ und $\Delta R_3$ gleiche Werte erreichen.

Für die Widerstandsänderungen $\Delta R2$ und $\Delta R4$ gilt:

$$\Delta R_2 = - -\Delta R_1 \text{ und } \Delta R_4 = -\Delta R_1 \qquad (1)$$

Bei einer Verschaltung gemäß Figur 4 ergibt sich ein Brückensignal

$$U_Q = U \cdot \frac{1}{4R}(\Delta R_1 + \Delta R_2 - \Delta R_3 - \Delta R_4) \qquad (2)$$

Für die Position erhält man

$$\Delta R_1 = \Delta R_3 \qquad (3)$$

Unter Berücksichtigung der Figur 1 ergibt sich damit

$$\Delta R_2 = \Delta R_4 \qquad (4)$$

wobei aus der Formel 2 sich ein Brückensignal von

$$U_Q = 0$$

ergibt.

Ein ähnliches Bild ergibt sich bei einer beliebigen örtlich variierenden Biegebelastung um die biegeweiche Achse (X-Achse). Dabei gilt:

$$\Delta R_1 = \Delta R_4 \qquad (5)$$

und

$$\Delta R_2 = \Delta R_3 \qquad (6)$$

für jede radiale Position R. Somit erhält man auch hier für das Brückensignal ein

$$U_Q = 0$$

Jede beliebige Biegung des Dehnungsmeßstreifen läßt sich in Biegeanteile um die biegesteife und die biegeweiche Achse zerlegen. Das Brückensignal ist dabei eine Summe der Signalanteile der Biegekomponenten um die biegesteife bzw. biegeweiche Achse. Sobald sich die Widerstände in der Position $r_0$ befinden, liegt somit ein exakt biegekompensierter Sensor für Drehmomente um die Z-Achse vor.

Aufgrund dieser strahlenförmigen Anordnung der Brückenwiderstände um die Ausnehmung wird eine hohe Biegekompensation erreicht. Dies ist insbesondere beim Einsatz eines solchen Dehnungsmeßstreifen für den Anwendungsfall der elektrischen Lenkhilfe von Vorteil, wo insbesondere aufgrund des konkreten Einbauzustandes im Fahrzeuges örtlich variierende Biegemomente auftreten.

Auf einen solchen Sensor können mehrere derartige Brückenschaltungen beliebig aneinander gereiht sein. Torsionsmessungen können dabei auch erfolgen, wenn die Brückenwiderstände in einer oder in mehreren Ebenen angeordnet sind und führen zum gleichen biegekompensierten Ergebnis.

Eine Biegekompensation kann auch erreicht werden, wenn zwei Brückenschaltungen vorhanden sind, wobei die Widerstände der einen Brücke in Positionen $r>r_0$ und die Widerstände der anderen Brücke in Positionen $r<r_0$ angeordnet sind, wodurch die biegebedingten Fehler jeweils unterschiedliche Vorzeichen aufweisen und die Beträge der Fehler gleich groß sind.

**Patentansprüche**

1. Biege- und querkraftunempfindlicher mechanisch-elektrischer Wandler, bestehend aus einer dehnungsempfindliche Widerstände aufweisenden Brückenschaltung, wobei die dehnungsempfindlichen Widerstände unmittelbar auf einem, einen annähernd rechteckförmigen Querschnitt aufweisenden Bauteil angeordnet sind, an welchem zwischenträgerfrei direkt Torsionskräfte angreifen, wodurch bei Torsion des Bauteils ein der Dehnung der Dickschichtwiderstände entsprechendes elektrisches Signal an der Brückenschaltung abnehmbar ist, **dadurch gekennzeichnet, daß** die dehnungsempfindlichen Widerstände (R1, R2, R3, R4) auf dem Bauteil (1) kreisähnlich angeordnet sind, wobei je ein Widerstand (R1, R3) des ersten Brückenzweiges diagonal zu einem Widerstand (R4, R2) des zweiten Brückenzweiges jeweils in einer Position (r) angeordnet ist, in welcher die Widerstandsänderung unter allgemeiner Biegelast gleiche Werte einnimmt, wodurch das an der Brückenschaltung

abnehmbare Ausgangssignal ($U_Q$) nur von der Torsionsbelastung abhängig ist.

2. Mechanisch-elektrischer Wandler nach Anspruch 1, **dadurch gekennzeichnet, daß** die dehnungsempfindlichen Widerstände (R1, R2, R3, R4) bei einer Biegelast um die biegesteife Achse des Bauteils (1) so angeordnet sind, daß die Widerstandsänderung der Widerstände (R1, R3, R2, R4) eines Brückenzweiges bei gleichem Betrag entgegengesetzt verläuft.

3. Mechanisch-elektrischer Wandler nach Anspruch 1 oder 2, **dadurch gekennzeichnet, daß** die dehnungsempfindlichen Widerstände (R1, R3; R2, R4) eines Brückenzweiges bei einer Biegelast um die biegeweiche Achse des Bauteiles (1) annähernd identische Widerstandsänderungen aufweist.

4. Mechanisch-elektrischer Wandler nach Anspruch 1, **dadurch gekennzeichnet, daß** die dehnungsempfindlichen Widerstände (R1, R2, R3, R4) der Brückenzweige außerhalb einer, auf der Oberfläche (8) des Bauteiles (1) verlaufenden Ausnehmung (3), diese umfassend, angeordnet sind.

5. Mechanisch-elektrischer Wandler nach Anspruch 4, **dadurch gekennzeichnet, daß** das Bauteil (1) in seinem Randbereich radiale Einbuchtungen (9, 10, 11, 12) sowie die Ausnehmung (3) radiale Bereiche aufweist, wobei je eine radiale Einbuchung (9, 10, 11, 12) sowie ein radialer Bereich der Ausnehmung (3) einem Widerstand (R1, R2, R3, R4) zugeordnet ist, welcher auf einer Verbindunglinie (13) des ersten Radius der Einbuchtung (9, 10, 11, 12) und eines zweiten Radius der Ausnehmung (3) angeordnet ist.

6. Mechanisch-elektrischer Wandler nach Anspruch 5, **dadurch gekennzeichnet, daß** die Ausnehmung (3) kreisförmig ausgebildet ist, wobei jeder Widerstand (R1, R2, R3, R4) radial mit annähernd gleichen Winkelabständen um die Ausnehmung (3) und in seiner Längserstreckung senkrecht zu der Verbindungslinie (13) angeordnet ist.

7. Mechanisch-elektrischer Wandler nach einem der vorhergehenden Ansprüche, **dadurch gekennzeichnet, daß** die Widerstände (R1, R2, R3, R4) auf der planen Oberfläche (8) des aus Metall bestehenden Bauteil (1) angeordnet sind.

8. Mechanisch-elektrischer Wandler nach Anspruch 7, **dadurch gekennzeichnet, daß** die Widerstände (R1, R2, R3, R4) als Dickschichtwiderstände ausgebildet sind, wobei die Empfindlichkeit der zur Herstellung der Widerstände verwendeten Widerstandspaste bezüglich einer Längs- und Querdehnung unterschiedlich ist.

9. Mechanisch-elektrischer Wandler nach Anspruch 7 oder 8 **dadurch gekennzeichnet, dass** zur Torsionsmessung die Dickschichtwiderstände (R1, R2, R3, R4) in einer Ebene angeordnet sind.

10. Mechanisch - elektrischer Wandler nach Anspruch 7 oder 8 **dadurch gekennzeichnet, dass** zu Torsionsmessung die Dickschichtwiderstände (R1, R2, R3, R4) in zwei oder mehreren Ebenen angeordnet sind.

11. Mechanisch-elektrischer Wandler nach Anspruch 1 **dadurch gekennzeichnet, dass** zwei Brückenschaltungen vorhanden sind, wobei die Widerstände der ersten Brückenschaltung in einer Position $r_1 < r_0$ und die Widerstände der zweiten Brückenschaltung in einer Position $r_2 > r_0$ angeordnet sind, wobei die Positionen $r_1$ und $r_2$ betragsmäßig dieselbe Differenz zur Position $r_0$ aufweisen.

Fig. 1

# Fig. 2

# Fig. 3

Biegeweiche Achse

Einspannung

Biegesteife Achse

# Fig. 4